# EUROPÄISCHE PATENTSCHRIFT

(11) **EP 0 870 424 B1**
(45) Veröffentlichungstag und Bekanntmachung des Hinweises auf die Patenterteilung: **07.08.2002**
(21) Anmeldenummer: 98105654.2
(22) Anmeldetag: 27.03.1998
(51) Int. Cl.: A01F 15/07

(54) **Rundballenpresse**
Rotobaler
Presse à balles rondes

(30) Priorität: 11.04.1997 DE 29706544 U
(43) Veröffentlichungstag der Anmeldung: 14.10.1998
(73) Patentinhaber: Kverneland Geldrop B.V., 5660 AA Geldrop (NL)
(72) Erfinder: van den Wildenberg, Leonardus Johannes, 6021 CT Budel (NL)
(74) Vertreter: Grünecker, Kinkeldey, Stockmair & Schwanhäusser Anwaltssozietät

(56) Entgegenhaltungen:
- EP-A- 0 037 155
- EP-A- 0 228 944
- EP-A- 0 264 492
- GB-A- 2 090 560

## Beschreibung

Die Erfindung betrifft eine Rundballenpresse der im Oberbegriff des Anspruchs 1 und des nebengeordneten Anspruchs 5 angegebenen Art.

Bei Rundballenpressen mit variabler Presskammer ist die Startphase beim Wickeln eines Rundballens besonders wichtig. Ein von Anfang an gleichförmig und zügig gewickelter Ballenkern ist für die Dichteverteilung im fertigen Rundballen und seine Qualität zwingend. Ferner soll von Anfang an das Erntegut möglichst harmonisch und ohne Stauung den Ballenkern bilden. Dabei soll kein Erntegut in Toträumen verharren, nicht zwischen bewegliche Komponenten der Rundballenpresse eindringen oder sich um rotierende Komponenten herumwickeln, weil dies zu zeitaufwendig zu behebenden Störungen und zu Schäden führen kann. Die baulichen Voraussetzungen in und die Form der Startkammer müssen deshalb eine störungsfreie und effiziente Startphase bei baulich einfachem Aufwand begünstigen, wobei es wünschenswert ist, in der Heckklappe möglichst wenige, leichte und platzsparende Komponenten vorzusehen. Nur bei Erfüllung zumindest einiger dieser Voraussetzungen lassen sich hohe Ballenqualität und eine störungsfreie Startphase auch bei kritischem Erntegut erreichen, z.B. bei Erntegut mit kurzen und feuchten oder mit langen und trockenen Bestandteilen.

Eine aus EP-B-0 228 944 bekannte Rundballenpresse hat eine Startkammer mit einer für die Startphase günstigen Form eines Trapezes, in der die Wandabschnitte für einen weitgehend kontinuierlichen Fluss des Ernteguts sorgen. Die ersten und dritten Wandabschnitte werden von je einem Rollengang mit drei angetriebenen Rollen gebildet, der um die Achse der untersten Rolle aus der Startstellung in eine Endstellung verschwenkbar ist. Drei Rollen sind für eine ausreichende Höhe insbesondere des ersten Wandabschnittes erforderlich, weil die Achse der untersten Rolle die Schwenkachse des Rollengangs ist und in der Startstellung sowie in der Endstellung annähernd auf der Höhe der Achse einer der untersten Rolle benachbarten Starterrolle liegt. Ein Rollengang mit drei Rollen und den zugehörigen Antriebseinrichtungen für die Rollen baut groß und schwer. Aufgrund der tiefen, und in der Start- bzw. Endstellung identischen Position der untersten Rolle des Rollengangs entsteht in Zuführrichtung des Ernteguts in die Startkammer ein zwickelförmiger Totraum zwischen der Starterrolle und dem ersten Wandabschnitt, in dem sich Erntegut stauen und zu Störungen führen kann. Auch der Rollengang des dritten Wandabschnitts schwenkt um die Achse der untersten Rolle.

Bei einer aus EP-A-0 037 155 bekannten Rundballenpresse wird die Presskammer von Pressrollen begrenzt, die den Rundballen ohne Pressriemen beaufschlagen. Es ist ein äußerer Kranz aus stationär mit Zwischenabständen gelagerten Pressrollen und ein innerer Kranz aus in die Zwischenräume zwischen den äußeren Pressrollen verschwenkbar geführten Pressrollen vorgesehen. Der innere Kranz begrenzt die runde Startkammer. Mit wachsendem Rundballen werden die Pressrollen des inneren Kranzes allmählich nach außen zwischen die äußeren Pressrollen verdrängt. Die Bewegungsführung der verschiebbaren Pressrollen erfordert einen hohen technischen Aufwand, wie auch die Antriebsverbindungen, über die die verschiebbaren Pressrollen angetrieben werden. Die Größe der zwar runden Startkammer ist relativ groß, so dass die Startphase erschwert wird und Emtegut zwischen die inneren Pressrollen eindringen und sich verwickeln kann. Da jede bewegliche Pressrolle eine eigene kreisbogenförmige Führungsbahn aufweist, deren Krümmungszentrum in der Achse der in Zuführrichtung des Ernteguts vorhergehenden, stationären Pressrolle liegt, entfernen sich die beweglichen Pressrollen bereits bei geringfügigem Anwachsen des Ballenkerns in der Startphase in Umfangsrichtung der Presskammer voneinander. Zwischen ihnen werden zwickelförmige Toträume mindestens entsprechend dem Rollendurchmesser geöffnet. Da jede innere Pressrolle nur gegen Federkraft ballendruckabhängig verlagert wird, können die inneren Pressrollen mit dem schnell einlaufenden Erntegutstrom relativ zueinander versetzen.

Bei der aus EP 0 264 492 A bekannten Rundballenpresse wird die Startkammer von ersten, zweiten und dritten Wandabschnitten, jeweils gebildet aus Pressrollen, begrenzt. Der erste Wandabschnitt besteht aus drei in einer Rahmenkonstruktion mit unveränderlichen Zwischenabständen positionierten Rollen. Die Schwenk- und Stellachse der Rahmenkonstruktion fällt mit der Achse der untersten Rolle des ersten Wandabschnitts zusammen und liegt in etwa auf der gleichen Höhe wie die Drehachse einer an die Zuführöffnung angrenzenden, stationären Starterrolle. An der Rahmenkonstruktion ist in einem Gelenk mit einer Gelenkachse, die mit der Achse der obersten Rolle der Rahmenkonstruktion zusammenfällt, eine Schwinge schwenkbar gelagert, in der zwei den zweiten Wandabschnitt definierende Rollen gelagert sind. Diese Schwinge wird in der Startposition mit ihrer äußeren Rolle bis nahe an im Pressengehäuse gelagerte, stationäre Rollen verschwenkt, wobei dort ein großer Zwischenspalt und eine zwickelförmiger Totraum gebildet werden. Die beiden untersten der stationären Rollen im Pressengehäuse bilden den dritten Wandabschnitt direkt angrenzend an die Zuführöffnung. In der Startposition wird zwischen dem ersten Wandabschnitt und der Starterrolle ein spitzwinkeliger Totraum für Erntegut geformt, der erst mit wachsender Ballengröße allmählich beseitigt wird.

Der Erfindung liegt die Aufgabe zugrunde, eine Rundballenpresse der eingangs genannten Art zu schaffen, die baulich einfach ist und eine störungsfreie und zügige Startphase erreichen lässt.

Die gestellte Aufgabe wird erfindungsgemäß entweder mit den Merkmalen des Anspruchs 1 oder den Merkmalen des unabhängigen Anspruchs 5 gelöst.

Da zumindest der ganze erste Wandabschnitt zwischen der Startposition und der Endposition höhenverstellt wird, reicht zur Ausbildung einer optimierten Startkammerform eine geringere Höhe des ersten Wandabschnittes aus, was Platz, Gewicht und Teile einspart. Aufgrund der angehobenen Position in der Startphase wird ferner unerwünschter Totraum zwischen dem in der Startkammer liegenden Teil der Zuführvorrichtung und dem ersten Wandabschnitt vermieden, so dass das Erntegut zügig und harmonisch den Wandabschnitten entlang bewegt und zum Ballenkern gewickelt wird. Bei der Bewegung des ersten Wandabschnitts in die Endstellung gelangt der untere Endbereich, d.h. die unterste Rolle des ersten Wandabschnitts in eine abgesenkte Position. Bei dieser mit dem Wachsen des gewickelten Rundballens ablaufenden Bewegung des ersten Wandabschnittes schmiegt sich die Kontur der in der Presskammer vorliegenden Komponenten, d.h. des in die Presskammer greifenden Teils der Zuführvorrichtung, z.B. der Starterrolle, und des ersten Wandabschnitts weitestgehend hinterschneidungsfrei an den Umfang des Rundballens an. Dies gewährleistet in und ab der Startphase eine saubere Anlage des Erntegutstroms am rotierenden und im Wachsen begriffenen Ballenkern. Der erste Wandabschnitt lässt sich aufgrund des Höhengewinns durch die Verstellbarkeit in Hochrichtung relativ kurz und damit kostengünstiger, leichter und platzsparender ausbilden. Durch den Abstand der Stellachse von der untersten der Rollen in der Rahmenkonstruktion führen die Rollen des ersten Wandabschnittes eine gemeinsame Bewegung aus, bei der sie ihre relativen Zwischenabstände stets beibehalten und keine Toträume entstehen lassen, wobei die unterste Rolle ebenfalls ohne Toträume zu formen entlang des in die Presskammer greifenden Teils der Zuführvorrichtung verlagert und dabei mit wachsendem Ballen allmählich abgesenkt wird.

Weitere, vorteilhafte Ausführungsformen gehen aus den Unteransprüchen hervor.

Anhand der Zeichnung werden Ausführungsformen des Erfindungsgegenstandes erläutert. Es zeigen:
- Fig. 1: eine schematische Phantomdarstellung einer Rundballenpresse in Seitenansicht (Startphase),
- Fig. 2: eine Darstellung der Rundballenpresse ähnlich der von Fig. 1, jedoch bei fertiggestelltem Rundballen,
- Fig. 3: schematisch eine Detailvariante in der Startstellung,
- Fig. 4: eine weitere Alternative in der Startstellung,
- Fig. 5: eine weitere Alternative in der Startstellung,
- Fig. 6: eine weitere Alternative.

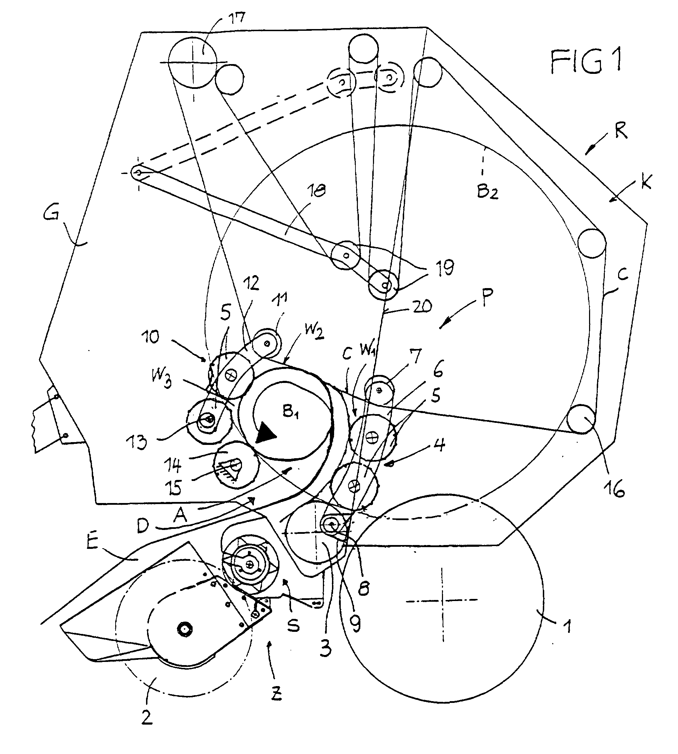

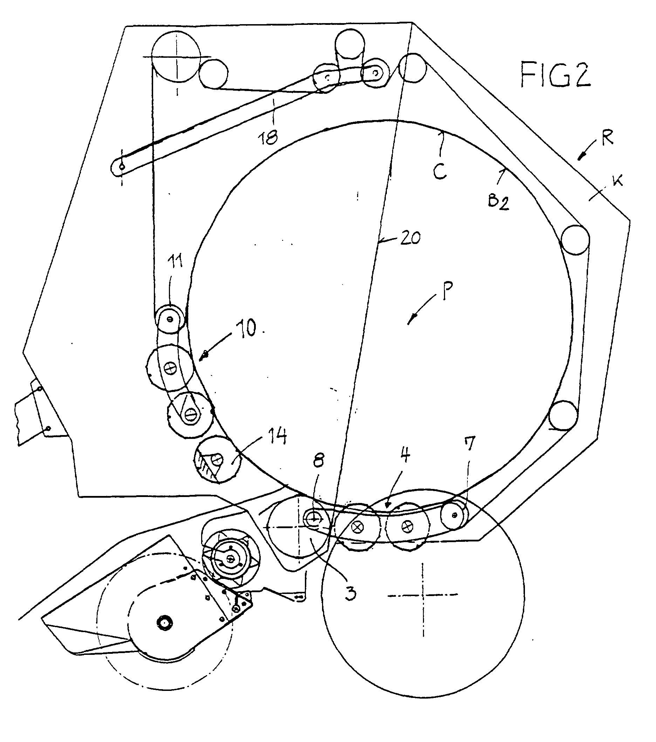

Eine Rundballenpresse R (Fig. 1 und 2) weist ein Pressengehäuse G mit einer hochschwenkbaren Heckklappe K und ein Fahrwerk 1 auf. Das Pressengehäuse G definiert mit der Heckklappe K und seitlichen Begrenzungen eine variable Presskammer P, die einem Teil ihrer Umfangserstreckung von einer flexiblen Pressbahn C umschlossen ist. Die Preßbahn C kann aus einzelnen, nebeneinanderliegenden Riemen, einem über die gesamte Preßkammerbreite durchgehenden Band aus zweckmäßigerweise verstärktem Kunststoff oder aus querliegenden, endseitig an Ketten abgestützten Stäben gebildet sein. Zum Abstützen der Preßbahn C sind stationäre Rollen 16 vorgesehen. Die Preßbahn C wird in Wickelrichtung des Rundballens (entgegen dem Uhrzeigersinn) mit einer Antriebsrolle 17 angetrieben und durch eine schematisch angedeutete Spannvorrichtung 18 mit Spannrollen 19 gespannt gehalten. Die Schließseite der Heckklappe K ist mit 20 bezeichnet.

Zur PreßkammerP, die ausgehend von einer Startkammer A (Fig. 1) bis auf die Größe B2 des endgültigen Ballens vergrößerbar ist, führt eine Zuführöffnung D, in deren Bereich eine Zuführvorrichtung Z für Erntegut E vorgesehen ist. Die Zuführvorrichtung weist beim gezeigten Ausführungsbeispiel eine übliche Pick-up-Vorrichtung 2 und eine in der Preßkammer und im Pressengehäuse G antreibbar und drehbar gelagerte Starterrolle 3 auf. Ferner kann zwischen der Pick-up-Vorrichtung 2 und der Starterrolle 3 ein Schneidwerk oder Schneckenförderer S eingeordnet sein. Alternativ ist es möglich, anstelle der Starterrolle 3 die Pick-up-Vorrichtung 2 zu verlängern und mit einem Endteil annähernd in der Position der Starterrolle 3 in die Preßkammer P hineingreifen zu lassen.

Die Startkammer A in Fig. 1 wird begrenzt durch erste, zweite und dritte Wandabschnitte W1, W2 und W3, durch eine stationär an einer Achse 15 gelagerte Rolle 14 im Pressengehäuse, und durch die Starterrolle 3. Die Wandabschnitte W1, W2, W3 schließen in ihren Startstellungen zweckmäßig jeweils paarweise Winkel > 75° ein, so daß sich zusammen mit dem Umfang der Rolle 4 und der Starterrolle 3 eine Form ergibt, die weitgehend an die runde Form eines Ballenkerns B1 angepaßt ist. Gegebenenfalls sind nicht dargestellte Spannvorrichtungen vorgesehen, um die Ausbildung der Startkammer A zu unterstützen. Die Größe der Startkammer A könnte, z.B. mittels Anschlageinrichtungen für die Wandabschnitte W1, W2, W3 verstellbar sein.

Der erste Wandabschnitt W1 ist ein Rollengang 4 mit zwei Rollen 5 und einer Preßbahn-Umlenkrolle 7. Die Rollen 5 (wenigstens eine ist angetrieben) und 7 sind in einer Rahmenkonstruktion 6 gelagert, die in oder an der Heckklappe K um eine Achse schwenkbar ist, wobei die Achse gleichzeitig eine Stellachse 8 für den ersten

Wandabschnitt W1 definiert, um die der Wandabschnitt W1 aus der gezeigten Startstellung (Fig. 1) in die Endstellung gemäß Fig. 2 unter Ausführen einer Absenkbewegung bewegbar ist. Die Stellachse 8 ist an einer Lagerung 9 an der Heckklappe K abgestützt, wobei sich die Lagerung 9 über die Schließseite 20 der Heckklappe K nach außen in das Pressengehäuse G erstrecken kann.

In der Startstellung gemäß Fig. 1 führt die untere Rolle 5, die den unteren Endbereich des ersten Wandabschnittes W1 definiert, die Kontur der Starterrolle 3 in Zuführrichtung des Ernteguts E ohne Totraum fort. In der Endposition gemäß Fig. 2 ist hingegen der erste Wandabschnitt W um die Stellachse 8 unten verlagert, so daß beide Rollen 5 am Umfang des fertigen Rundballens anliegen.

Der zweite Wandabschnitt W2 wird durch einen Abschnitt der Preßbahn C gebildet, der sich von der Umlenkrolle 7 zu einer Umlenkrolle 11 am dritten Wandabschnitt W3 erstreckt, und von dieser Umlenkrolle 11 weiter zur Antriebsrolle 17.

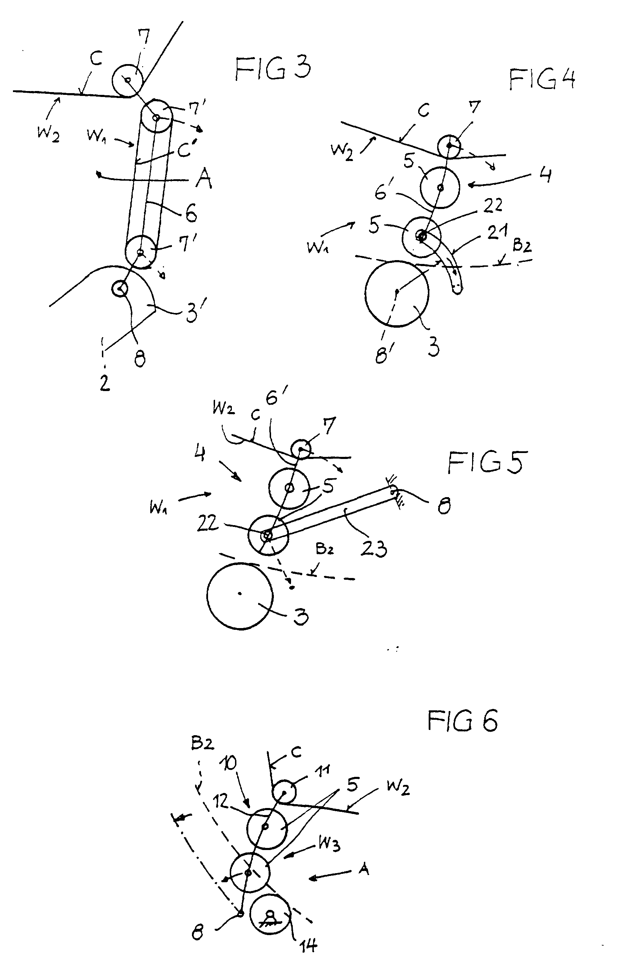

Der dritte Wandabschnitt W3 ist ein Rollengang 10 mit zwei Rollen 5, einer Rahmenkonstruktion 12 und der Umlenkrolle 11. Die Rahmenkonstruktion 12 ist um die oder bei der Drehachse der unteren Rolle 5 bei 13 schwenkbar und/oder um eine davon beabstandete Stellachse 8 (Fig. 6), ähnlich wie der erste Wandabschnitt W1. Zwischen der unteren Rolle 5 des Rollengangs 10 und der Zuführöffnung D ist eine weitere, stationäre und angetriebene Rolle 14 vorgesehen, die z.B. bei 15 im Pressengehäuse G gelagert ist.

Am Beginn der Startphase hat die Startkammer A die Form gemäß Fig. 1. Das Erntegut wird zügig und gleichförmig in den Ballenkern B1 gewickelt, der dann die Wandabschnitte W1, W2, und W3 zu verdrängen beginnt. Der erste Wandabschnitt W1 schwenkt im Uhrzeigersinn um die Stellachse 8, wobei er eine Absenkbewegung ausführt. Der dritte Wandabschnitt W3 wird entgegen dem Uhrzeigersinn um die Achse 13 (oder seine Stellachse 8)verschwenkt. Der zweite Wandabschnitt W2 verlängert sich und wird in eine bauchige Form übergeführt. Sobald der gewickelte Rundballen die Größe B2 gemäß Fig. 2 hat, liegen die vorbeschriebenen Komponenten in den Endstellungen gemäß Fig. 2.

In weiterer Folge wird der Rundballen zumeist in eine Umhüllung eingebracht und nach Öffnen der Heckklappe K ausgeworfen. Dann wird die Form der Startkammer A wieder hergestellt, gegebenenfalls unterstützt durch entsprechende Federeinrichtungen und Anschläge.

Der Vergleich der Fig. 1 und 2 zeigt, daß der ganze Rollengang 4 bei der Bewegung in die Endstellung eine Absenkbewegung ausführt, und zwar eine Schwenkbewegung um die Stellachse 8, die sich im Abstand von der unteren Rolle 5 und beispielsweise innerhalb der Kontur der Starterrolle 3 befindet. Es ist denkbar, die Stellachse 8 im Abstand von der unteren Rolle und innerhalb der Kontur der Heckklappe K anzuordnen. Ferner könnte die Stellachse 8 mit der Drechachse der Starterrolle 3 zusammenfallen.

In Fig. 3 ist der erste Wandabschnitt W1 eine förderbahnartige, eigene Preßbahn C', die über zwei Umlenkrollen 7' in einer Rahmenkonstruktion 6 geführt wird. Die Rahmenkonstruktion 6 ist um die Stellachse 8 schwenkbar und trägt die Umlenkrolle 7. Anstelle der Starterrolle 3 von Fig. 1 ist in Fig. 3 eine verlängerte Pick-up-Vorrichtung in der Startkammer angedeutet, deren Endteil 3' den das Erntegut an den ersten Wandabschnitt W1 übergebenden Teil der Zuführvorrichtung Z bildet. Der zweite Wandabschnitt W2 ist ein Abschnitt der Preßbahn C. Bei der Bewegung aus der Startstellung (Fig. 2) in die Endstellung (nicht gezeigt) führt der erste Wandabschnitt W1 eine Absenkbewegung in Relation zum Teil 3' aus.

In Fig. 4 ist der erste Wandabschnitt W1 ein Rollengang 4 mit zwei Rollen 5 und der Umlenkrolle 7, die in der Rahmenkonstruktion 6 angeordnet sind. Die Rahmenkonstruktion 6' ist um eine Schwenkachse 22 schwenkbar, die mit der Achse der unteren Rolle 5 zusammenfällt. Der erste Wandabschnitt W1 ist in einer Kulissenführung 21 (mit bogenförmigem oder schrägen Verlauf) derart verlagerbar geführt, daß beim Verschwenken des ersten Wandabschnittes W1 dieser eine Absenkbewegung in Relation zur Starterrolle 3 ausführt, z.B. um die virtuelle Stellachse 8', die durch den Verlauf der Kulissenführung 21 definiert ist. Die Kulissenführung 21 ist z.B. in der Heckklappe K angeordnet. Es ist denkbar, anstelle einer Kulissenführung 21 einen Lenkermechanismus (nicht dargestellt) zur Bewegungsführung der Schwenkachse 22, z.B. in der Heckklappe K, vorzusehen.

In Fig. 5 ist der erste Wandabschnitt W1 durch den Rollengang 4 mit den beiden Rollen 5 und der Umlenkrolle 7 gebildet. Die Rahmenkonstruktion 6' ist um die Schwenkachse 22 verschwenkbar, wobei die Schwenkachse 22 an Lenkern 23 abgestützt ist, die um die Stellachse 8 verschwenkbar sind. Die Stellachse 8 befindet sich im Abstand von der unteren Rolle des Rollengangs 4 und in der Heckklappe K.

Obwohl der Rollengang 4 bzw. 10 mit zwei Rollen 5 ausgebildet ist, könnte wenigstens eine dritte, ggfs. angetriebene Rolle im Rollengang vorgesehen sein. Dann könnte gegebenenfalls die stationäre Rolle 14 weggelassen werden. Ferner ist es denkbar, auch den dritten Wandabschnitt W3 als einen Abschnitt der Preßbahn C auszubilden oder sogar den zweiten Wandabschnitt W2 durch einen Rollengang, der im Pressengehäuse G verschwenkbar ist.

In den vorbeschriebenen Ausführungsformen sind die unterschiedlichen Mechanismen nur beispielsweise gezeigt, die zum Erzeugen der Absenk- bzw. Anhebebewegung des Wandabschnittes W1 und/oder W2 benutzt werden. Über die gezeigten Ausführungsbeispiele hinaus sind weitere mechanische Lösungen für eine solche Bewegungssteuerung möglich. Entscheidend ist, daß der erste Wandabschnitt W1 beim Rückstellen in die Startposition relativ zur Zuführöffnung D angehoben wird, um dann die Kontur der Starterrolle 3 bzw. des Teils 3' der Zuführvorrichtung möglichst hinterschneidungsfrei fortzusetzen und dann tief in die Preßkammer P hineinzugreifen, und beim Verschwenken bei wachsendem Rundballen relativ zur Startposition abgesenkt wird.

In Fig. 6 ist auch der dritte Wandabschnitt W3, hier der Rollengang 10 mit wenigstens zwei Rollen 5, um die Stellachse 8 schwenkbar, die von der Achse der untersten Rolle 5 beabstandet ist. Beim Verschwenken verlagert sich der ganze Wandabschnitt W3 relativ zur Zuführöffnung D und zur stationären Rolle 14. Dadurch greift der Wandabschnitt W3 in der Startposition weit in die Preßkammer 8.

## Patentansprüche

1. Rundballenpresse (R) mit variabler Presskammer (P) und einer an einem Pressengehäuse (G) hochschwenkbaren Heckklappe (K), die zusammen mit Seitenwänden des Pressengehäuses und wenigstens einer an Rollen (7, 11, 16, 19) abgestützten, flexiblen Pressbahn (C) die Presskammer (P) begrenzt, mit einer Zuführöffnung (D) zur Presskammer, in deren Bereich eine Zuführvorrichtung (Z) für Erntegut vorgesehen ist, wobei die Presskammer von einer kleineren Startkammer (A) oberhalb der Zuführöffnung (D) bis auf die Größe (B2) des fertigen Ballens vergrößerbar ist und die Startkammer (A) zumindest erste und dritte Wandabschnitte (W1, W2) aufweist, jeweils aus einer Rahmenkonstruktion (6) mit mindestens zwei zueinander parallelen, beabstandeten Rollen (5, 7, 7', 11), wobei der erste und dritte Wandabschnitt (W1, W2) bei seinem unteren Endbereich nahe eines in der Startkammer (A) angeordneten Teils (3, 3') der Zuführvorrichtung (Z) aus einer Startposition mit wachsendem Ballen bis in eine Endposition verschwenkbar ist, **dadurch gekennzeichnet, dass** die Rahmenkonstruktion (6) des ersten Wandabschnitts (W1) zwischen der Startposition und der Ballenendgrößenposition um eine zur Presskammerachse parallele Stellachse (8) bewegungsgeführt ist, die zumindest in etwa in Verlängerung der Rahmenkonstruktion in einem Abstand von der untersten der mindestens zwei Rollen (5, 7, 7') derart angeordnet ist, dass der erste Wandabschnitt (W1) als Ganzes in der Startposition relativ zur Zuführöffnung (D) angehoben ist und tief in die Presskammer (P) hineingreift, und in der Ballenendgrößenposition relativ zur angehobenen Startposition abgesenkt ist und sich an den Ballen (B) anschmiegt.

2. Rundballenpresse nach Anspruch 1, **dadurch gekennzeichnet, dass** die Stellachse (8) gleichzeitig die Schwenkachse der Rahmenkonstruktion (6) ist.

3. Rundballenpresse nach Anspruch 1, **dadurch gekennzeichnet, dass** die Stellachse (8') virtuell das Krümmungszentrum einer gekrümmten Kulissenführung (21) ist, dass die Rahmenkonstruktion (6') zusätzlich um eine zur Stellachse (8') parallele Schwenkachse (22) schwenkbar ist, die zumindest in etwa bei der Achse der untersten Rolle (5) liegt, und dass die Schwenkachse (22) in der Kulissenführung (21) geführt ist.

4. Rundballenpresse nach Anspruch 1, **dadurch gekennzeichnet, dass** die Rahmenkonstruktion (6) mit einem Lenkermechanismus um die Stellachse verlagerbar und mit dem Lenkermechanismus über eine Schwenkachse (22) schwenkbar verbunden ist.

5. Rundballenpresse (R) mit variabler Presskammer (P) und einer an einem Pressengehäuse (G) hochschwenkbaren Heckklappe (K), die zusammen mit Seitenwänden des Pressengehäuses und wenigstens einer an Rollen (7, 11, 16, 19) abgestützten, flexiblen Pressbahn (C) die Presskammer (P) begrenzt, mit einer Zuführöffnung (D) zur Presskammer, in deren Bereich eine Zuführvorrichtung (Z) für Erntegut vorgesehen ist, wobei die Presskammer von einer kleineren Startkammer (A) oberhalb der Zuführöffnung (D) bis auf die Größe (B2) des fertigen Ballens vergrößerbar ist und die Startkammer (A) zumindest erste und dritte Wandabschnitte (W1, W2) aufweist, jeweils aus einer Rahmenkonstruktion (6) mit mindestens zwei zueinander parallelen, beabstandeten Rollen (5, 7, 7', 11), wobei der erste und dritte Wandabschnitt (W1, W2) bei seinem unteren Endbereich nahe eines in der Startkammer (A) angeordneten Teils (3, 3') der Zuführvorrichtung (Z) aus einer Startposition mit wachsendem Ballen bis in eine Endposition verschwenkbar ist, **dadurch gekennzeichnet, dass** die Rahmenkonstruktion (6') des ersten Wandabschnitts (W1) um eine zur Presskammerachse parallele und zumindest in etwa bei der Achse der untersten Rolle (5) liegende Schwenkachse (22) schwenkbar an Lenkern (23) abgestützt ist, die um eine zur Presskammerachse parallele Stellachse (8) schwenkbar sind, welche im Abstand von der untersten Rolle (5) und an der der Zuführöffnung abgewandeten Seite der Schwenkachse (22) derart angeordnet ist, dass der erste Wandabschnitt als Ganzes in der Startposition relativ zur Zuführöffnung (D) angehoben ist und tief in die Presskammer (P) hineingreift, und in der Ballenendgrößenposition relativ zur Höhenlage in der Startposition abgesenkt ist und sich an den Ballen anschmiegt.

6. Rundballenpresse nach Anspruch 1 oder 5, **dadurch gekennzeichnet, dass** die Stellachse (8, 8') bzw. die Kulissenführung (21) in der Heckklappe (K) oder im Pressengehäuse (G) angeordnet ist.

7. Rundballenpresse nach Anspruch 1 oder 5, **dadurch gekennzeichnet, dass** in der Zuführöffnung (D) beim ersten Wandabschnitt (W1) eine stationäre Starterrolle (3) und in Zuführrichtung vor dieser eine Pick-up-Vorrichtung (2) vorgesehen sind, zwischen denen, vorzugsweise, ein Schneidwerk oder ein Schneckeförderer (S) angeordnet ist.

8. Rundballenpresse nach Anspruch 1 oder 5, **dadurch gekennzeichnet, dass** der Teil (3') der Zuführvorrichtung (Z) ein bogenförmig verlaufendes Ende einer direkt in die Startkammer (A) arbeitenden, zum ersten Wandabschnitt (W1) fördernden Pick-up-Vorrichtung ist.

9. Rundballenpresse nach Anspruch 1, **dadurch gekennzeichnet, dass** die Stellachse (8) - in einer Seitenansicht - innerhalb des Umrisses der Starterrolle (3) bzw. des Endes (3') der Pick-up-Vorrichtung angeordnet ist.

10. Rundballenpresse nach Anspruch 1, **dadurch gekennzeichnet, dass** die Stellachse (8) in einem gegenüber der Schließseite (20) der Heckklappe (K) am Pressengehäuse (G) vorstehenden Lagerung (9) angeordnet ist.

11. Rundballenpresse nach Anspruch 1 oder 5, **dadurch gekennzeichnet, dass** der erste Wandabschnitt (W1) ein Rollengang (4) mit wenigstens einer angetriebenen Rolle (5) ist.

12. Rundballenpresse nach Anspruch 1 oder 5, **dadurch gekennzeichnet, dass** der erste Wandabschnitt (W1) eine förderbandartige Pressbahn (C') aufweist, die an den als Umlenkrollen ausgebildeten Rollen (7') in der Rahmenkonstruktion (6) geführt ist.

13. Rundballenpresse nach Anspruch 1 oder 5, **dadurch gekennzeichnet, dass** die Rahmenkonstruktion (12) des dritten Wandabschnitts (W3) um eine zur Presskammerachse parallele Stellachse (8) schwenkbar ist, die zumindest in etwa in Verlängerung der Rahmenkonstruktion (12) in einem Abstand unterhalb der untersten Rolle (5) angeordnet ist.

14. Rundballenpresse nach Anspruch 1 oder 5, **dadurch gekennzeichnet, dass** zwischen den ersten und dritten Wandabschnitte (W1, W2) ein zweiter Wandabschnitt (W2) vorgesehen ist, der von der flexiblen Pressbahn (C) gebildet wird, die an an beiden Rahmenkonstruktionen (6,12) vorgesehenen Pressbahn-Umlenkrollen (7, 11) abgestützt ist.

15. Rundballenpresse nach Anspruch 1 oder 5, **dadurch gekennzeichnet, dass** die ersten, zweiten und dritten Wandabschnitte (W1, W2, W3) in ihren Startpositionen jeweils paarweise Winkel > 75° miteinander einschließen.

## Claims

1. Roll baler (R), including a variable pressing chamber (P) and a rear flap (K), which is upwardly pivotable on a baler housing (G) and defines the pressing chamber (P) together with lateral walls of the baler housing and at least one flexible pressing web (C), which is supported on rollers (7, 11, 16, 19), said baler including a supply aperture (D) leading to the pressing chamber, a supply apparatus (Z) for supplying harvested material being provided in the region of said chamber, the pressing chamber being enlargeable from a relatively small starting chamber (A) above the supply aperture (D) to the size (B2) of the finished bale, and the starting chamber (A) having at least first and third wall portions (W1, W2), which are respectively formed from a frame structure (6) having at least two spaced-apart rollers (5, 7, 7', 11), which are parallel to each other, the first and third wall portions (W1, W2) being pivotable from a starting position with a growing bale into an end position when the lower end regions of said portions are close to a part (3, 3') of the supply apparatus (Z) disposed in the starting chamber (A), **characterised in that** the frame structure (6) of the first wall portion (W1) is displaceably guided around an adjusting spindle (8), parallel to the pressing chamber axis, between the starting position and the final bale size position, said spindle being disposed at least substantially in an extension of the frame structure at a spacing from the lowermost of the at least two rollers (5, 7, 7') in such a manner that the first wall portion (W1) is raised as a whole in the starting position relative to the supply aperture (D) and extends deeply into the pressing chamber (P) and, in the final bale size position, said wall portion is lowered relative to the raised starting position and fits closely on the bale (B).

2. Roll baler according to claim 1, **characterised in that** the adjusting spindle (8) is simultaneously the pivotable spindle of the frame structure (6).

3. Roll baler according to claim 1, **characterised in that** the adjusting spindle (8) is virtually the centre of curvature of a curved connecting link (21), **in that** the frame structure (6') is additionally pivotable about a pivotable spindle (22), which is parallel to the adjusting spindle (8') and lies at least substantially on the spindle of the lowermost roller (5), and **in that** the pivotable spindle (22) is guided in the connecting link (21).

4. Roll baler according to claim 1, **characterised in that** the frame structure (6) is connected to a guide mechanism so as to be displaceable about the adjusting spindle and is pivotably connected to the guide mechanism via a pivotable spindle (22).

5. Roll baler (R), including a variable pressing chamber (P) and a rear flap (K), which is upwardly pivotable on a baler housing (G) and defines the pressing chamber (P) together with lateral walls of the baler housing and at least one flexible pressing web (C), which is supported on rollers (7, 11, 16, 19), said baler including a supply aperture (D) leading to the pressing chamber, a supply apparatus (Z) for supplying harvested material being provided in the region of said chamber, the pressing chamber being enlargeable from a relatively small starting chamber (A) above the supply aperture (D) to the size (B2) of the finished bale, and the starting chamber (A) having at least first and third wall portions (W1, W2), which are respectively formed from a frame structure (6) having at least two spaced-apart rollers (5, 7, 7', 11), which are parallel to each other, the first and third wall portions (W1, W2) being pivotable from a starting position with a growing bale into an end position when the lower end regions of said portions are close to a part (3, 3') of the supply apparatus (Z) disposed in the starting chamber (A), **characterised in that** the frame structure (6') of the first wall portion (W1) is supported on guide rods (23) so as to be pivotable about an adjusting spindle (8) and is disposed at a spacing from the lowermost roller (5) and on the side of the pivotable spindle (22) remote from the supply aperture in such a manner that the first wall portion is raised as a whole in the starting position relative to the supply aperture (D) and extends deeply into the pressing chamber (P) and, in the final bale size position, said wall portion is lowered relative to the vertical in the starting position and fits closely on the bale.

6. Roll baler according to claim 1 or 5, **characterised in that** the adjusting spindle (8, 8'), or respectively the connecting link (21), is disposed in the rear flap (K) or in the baler housing (G).

7. Roll baler according to claim 1 or 5, **characterised in that** a stationary starter roller (3) is provided in the supply aperture (D) in the case of the first wall portion (W1), and a pick-up apparatus (2) is provided in the supply direction upstream of said roller, a cutting mechanism or a screw conveyor (S) being preferably disposed between said roller and apparatus.

8. Roll baler according to claim 1 or 5, **characterised in that** the part (3') of the supply apparatus (Z) is an arcuately extending end of a pick-up apparatus which operates directly in the starting chamber (A) and conveys material to the first wall portion (W1).

9. Roll baler according to claim 1, **characterised in that** - in a side elevational view - the adjusting spindle (8) is disposed internally of the contour of the starter roller (3) or respectively of the end (3') of the pick-up apparatus.

10. Roll baler according to claim 1, **characterised in that** the adjusting spindle (8) is disposed in a bearing surface (9) protruding from the closing side (20) of the rear flap (K) on the baler housing (G).

11. Roll baler according to claim 1 or 5, **characterised in that** the first wall portion (W1) is a roller train (4) with at least one driven roller (5).

12. Roll baler according to claim 1 or 5, **characterised in that** the first wall portion (W1) has a pressing web (C'), which is in the form of a conveyor belt and is guided on the rollers (7'), configured as guide rollers, in the frame structure (6).

13. Roll baler according to claim 1 or 5, **characterised in that** the frame structure (12) of the third wall portion (W3) is pivotable about an adjusting spindle (8), which lies parallel to the pressing chamber axis and is disposed at least substantially in an extension of the frame structure (12) at a spacing below the lowermost roller (5).

14. Roll baler according to claim 1 or 5, **characterised in that** a second wall portion (W2) is provided between the first and third wall portions (W1, W2) and is formed by the flexible pressing web (C), which is supported on pressing web guide rollers (7, 11) provided on both frame structures (6, 12).

15. Roll baler according to claim 1 or 5, **characterised in that** the first, second and third wall portions (W1, W2, W3) form with one another angles > 75° in respective pairs in their starting positions.

## Revendications

1. Presse à balles rondes (R) avec une chambre de compression variable (P) et un volet arrière (K) apte à être pivoté vers le haut à un carter de presse (G), qui délimite ensemble avec des parois latérales du carter de presse et au moins une bande de compression flexible (C) prenant appui sur des rouleaux (7, 11, 16, 19), la chambre de compression (P), avec une ouverture d'amenée (D) vers la chambre de compression au voisinage de laquelle est prévu un dispositif d'amenée (Z) des produits récoltés, où la chambre de compression peut être agrandie à partir d'une plus petite chambre initiale (A) au-dessus de l'ouverture d'amenée (D) jusqu'à la grandeur (B2) de la balle finie, et la chambre initiale (A) présente au moins des premier et troisième tronçons de paroi (W1, W2), respectivement d'une construction de châssis (6) avec au moins deux rouleaux parallèles espacés (5, 7, 7', 11), où le premier et troisième tronçon de paroi (W1, W2), dans sa zone d'extrémité inférieure, à proximité d'une partie (3, 3') du dispositif d'amenée (Z) disposée dans la chambre initiale (A) peut être pivoté d'une position de démarrage avec une balle croissante jusque dans une position finale, **caractérisée en ce que** la construction de châssis (6) du premier tronçon de paroi (W1) est guidée d'une manière mobile entre la position de démarrage et la position de grandeur finale de la balle autour d'un axe de positionnement (8) parallèle à l'axe de la chambre de compression qui est disposé au moins approximativement dans le prolongement de la construction de châssis à un écart du rouleau des au moins deux rouleaux (5, 7, 7') de telle sorte que le premier tronçon de paroi (W1) est relevé dans son ensemble dans la position de démarrage relativement à l'ouverture d'amenée (D) et s'engage profondément dans la chambre de compression (P), et est abaissé dans la position de grandeur finale de la balle relativement à la position de démarrage relevée et s'adapte à la balle (B).

2. Presse à balles rondes selon la revendication 1, **caractérisée en ce que** l'axe de positionnement (8) est en même temps l'axe de pivotement de la construction de châssis (6).

3. Presse à balles rondes selon la revendication 1, **caractérisée en ce que** l'axe de positionnement (8') constitue virtuellement le centre de courbure d'un guidage à coulisse courbé (21), **en ce que** la construction de châssis (6') peut pivoter additionnellement autour d'un axe de pivotement (22) parallèle à l'axe de positionnement (8') qui se situe au moins approximativement à l'axe du rouleau inférieur (5), et **en ce que** l'axe de pivotement (22) est guidé dans le guidage à coulisse (21).

4. Presse à balles rondes selon la revendication 1, **caractérisée en ce que** la construction de châssis (6) est déplaçable par un mécanisme à bielles autour de l'axe de positionnement et est reliée d'une manière pivotante au mécanisme à bielles par un axe de pivotement (22).

5. Presse à balles rondes (R) avec une chambre de compression variable (P) et un volet arrière (K) pouvant être pivoté vers le haut à un carter de presse (G), qui délimite ensemble avec des parois latérales du carter de presse et au moins une bande de compression flexible (C) s'appuyant sur des rouleaux (7, 11, 16, 19) la chambre de compression (P), avec une ouverture d'amenée (D) à la chambre de compression au voisinage de laquelle est prévu un dispositif d'amenée (Z) des produits récoltés, où la chambre de compression peut être agrandie à partir d'une chambre de démarrage plus petite (A) au-dessus de l'ouverture d'amenée (D) jusqu'à la grandeur (B2) de la balle finie, et en ce que la chambre de démarrage (A) présente au moins des premier et troisième tronçons de paroi (W1, W2), respectivement d'une construction de châssis (6) avec au moins deux rouleaux parallèles l'un à l'autre et espacés (5, 7, 7', 11), où le premier et troisième tronçon de paroi (W1, W2) peut être pivoté dans sa zone d'extrémité inférieure à proximité d'une partie (3, 3') du dispositif d'amenée (Z) disposée dans la chambre de démarrage (A) à partir d'une position de démarrage, la balle s'agrandissant, jusque dans une position finale, **caractérisée en ce que** la construction de châssis (6') du premier tronçon de paroi (W1) s'appuie sur des bielles (23) d'une manière pivotante autour d'un axe de pivotement (22) parallèle à l'axe de la chambre de compression et se situant au moins approximativement auprès de l'axe du rouleau inférieur (5), qui peuvent être pivotées autour d'un axe de positionnement (8) parallèle à l'axe de la chambre de compression, qui est disposé à une distance du rouleau inférieure (5) et au côté de l'axe de pivotement (22) éloigné de l'ouverture d'amenée de telle sorte que le premier tronçon de paroi, dans son ensemble, est relevé dans la position de démarrage relativement à l'ouverture d'amenée (D) et s'engage profondément dans la chambre de compression (P) et est abaissé dans la position de la grandeur finale de la balle relativement à la position en hauteur dans la position de démarrage et s'adapte à la balle.

6. Presse à balles rondes selon la revendication 1 ou 5, **caractérisée en ce que** l'axe de positionnement (8, 8') respectivement le guidage à coulisse (21) est disposé dans le volet arrière (K) ou dans le carter de presse (G).

7. Presse à balles rondes selon la revendication 1 ou 5, **caractérisée en ce que** sont prévus dans l'ouverture d'amenée (D) au premier tronçon de paroi (W1) un rouleau de démarrage stationnaire (3) et dans la direction d'amenée en amont de celui-ci un dispositif de ramassage (2) entre lesquels est disposé de préférence un mécanisme de coupe ou un convoyeur à vis (S).

8. Presse à balles rondes selon la revendication 1 ou 5, **caractérisée en ce que** la partie (3') du dispositif d'amenée (Z) est une extrémité s'étendant en forme d'arc d'un dispositif de ramassage travaillant directement dans la chambre de démarrage (A), convoyant vers le premier tronçon de paroi (W1).

9. Presse à balles rondes selon la revendication 1, **caractérisée en ce que** l'axe de positionnement (8), en une vue de côté, est disposé à l'intérieur du contour du rouleau de démarrage (3) respectivement de l'extrémité (3') du dispositif de ramassage.

10. Presse à balles rondes selon la revendication 1, **caractérisée en ce que** l'axe de positionnement (8) est disposé dans un logement (9) faisant saillie par rapport au côté de fermeture (20) du volet arrière (K) au carter de presse (G).

11. Presse à balles rondes selon la revendication 1 ou 5, **caractérisée en ce que** le premier tronçon de paroi (W1) est un dégagement à rouleau (4) avec au moins un rouleau mené (5).

12. Presse à balles rondes selon la revendication 1 ou 5, **caractérisé en ce que** le premier tronçon de paroi (W1) présente une bande de compression (C') semblable à une bande de convoyage qui est guidée aux rouleaux (7') réalisés sous forme de rouleaux de renvoi dans la construction de châssis (6).

13. Presse à balles rondes selon la revendication 1 ou 5, **caractérisée en ce que** la construction de châssis (12) du troisième tronçon de paroi (W3) peut pivoter autour d'un axe de positionnement (8) parallèle à l'axe de la chambre de compression qui est disposé au moins approximativement dans le prolongement de la construction de châssis (12) à un écart en dessous du rouleau (5) le plus inférieur.

14. Presse à balles rondes selon la revendication 1 ou 5, **caractérisée en ce qu'**il est prévu entre les premier et troisième tronçons de paroi (W1, W3) un deuxième tronçon de paroi (W2) qui est formé par la bande de. compression flexible (C) qui prend appui sur des rouleaux de renvoi de bande de compression (7, 11) prévus aux deux constructions de châssis (6, 12).

15. Presse à balles rondes selon la revendication 1 ou 5, **caractérisée en ce que** les premier, deuxième et troisième tronçons de paroi (W1, W2, W3) forment dans leurs positions de démarrage respectivement par paires des angles > 75°.
